Europäisches Patentamt

European Patent Office

Office européen des brevets

(19)

(11) EP 0 863 488 A1

(12) **DEMANDE DE BREVET EUROPEEN**

(43) Date de publication:
**09.09.1998 Bulletin 1998/37**

(51) Int Cl.$^6$: **G06T 7/00**

(21) Numéro de dépôt: **98400484.6**

(22) Date de dépôt: **02.03.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **06.03.1997 FR 9702674**

(71) Demandeur: **ALCATEL ALSTHOM COMPAGNIE GENERALE D'ELECTRICITE**
**75008 Paris (FR)**

(72) Inventeurs:
- **Louis, Christian**
  **91400 Orsay (FR)**
- **Lechervy, Yves**
  **91000 Evry (FR)**

(74) Mandataire: **Fournier, Michel Robert Marie et al**
**COMPAGNIE FINANCIERE ALCATEL**
**Département Propriété Industrielle**
**30, avenue Kléber**
**75116 Paris (FR)**

(54) **Procédé de détection de contours de relief dans une paire d'images stéréoscopiques**

(57) La présente invention concerne un procédé de détection de contours de relief sur des images numériques représentant une vue aérienne ou de satellite d'un terrain.

Le procédé selon l'invention comporte les étapes suivantes :

- Calcul d'un modèle numérique du terrain à partir de deux images stéréoscopiques du terrain,
- Extraction des lignes de crête dans ledit modèle numérique,
- Projection des lignes de crête dans une desdites images stéréoscopiques,
- Calcul des contours dans ladite image,
- Décision qu'un contour est un contour de relief si la distance à la ligne de crête projetée la plus proche, au sens d'un certain critère d'affinité, est inférieure à un certain seuil.

FIG. 1

EP 0 863 488 A1

## Description

La présente invention concerne un procédé de détection de contours de relief sur des images numériques représentant une vue aérienne ou de satellite d'un terrain. Une application du procédé permet, par ailleurs, la construction de lignes de crête précises sur un modèle numérique de terrain.

La détection de contours est un problème classique de l'analyse d'images et de nombreuses techniques existent. Toutefois, ces techniques connues ne s'intéressent pas à la nature des contours et, notamment, ne permettent pas de distinguer les contours représentant des discontinuités de relief (typiquement, des lignes de crêtes) des contours de texture (par exemple, la limite entre un champ cultivé et une forêt).

Les applications d'un procédé permettant de distinguer les contours de relief et les contours de texture sont multiples. On peut citer à titre d'exemple la détection de structures humaines dans des images aériennes ou de satellite. D'une façon générale, ces structures se caractérisent en ce qu'elles présentent des arêtes aiguës (c'est-à-dire des lignes de crête) dont la localisation permet de détecter les contours de la structure. On voit, dès lors, que les procédés de l'état de la technique sont insuffisants pour résoudre ce genre de problème.

La présente invention pallie cette insuffisance et propose un procédé d'analyse d'images capable de ne détecter que les contours marquant des lignes de crête, de façon exclusive.

Pour cela, le procédé selon l'invention doit avoir à sa disposition deux images stéréoscopiques calibrées du même terrain, c'est-à-dire deux images du même terrain prises avec des paramètres de prise de vue différents mais connus.

Le procédé selon l'invention s'applique à l'une de ces deux images et comporte les étapes suivantes :

- calcul d'un modèle numérique du terrain,
- extraction des lignes de crête dans ledit modèle numérique,
- projection desdites lignes de crête dans une desdites images stéréoscopiques,
- calcul des contours dans ladite image,
- décision qu'un contour est un contour de relief si la distance à la ligne de crête projetée la plus proche, au sens d'un certain critère d'affinité, est inférieure à un certain seuil.

Comme nous l'avons précédemment évoqué, une application de l'invention consiste à construire des lignes de crête précises pour des modèles numériques de terrain. En effet, le processus de construction d'un modèle numérique de terrain implique de nombreuses interpolations qui font que sa précision est très dégradée par rapport à la précision des images qui ont servi à sa construction.

Or, certaines applications se basent sur les lignes de crête pour extraire des objets dans les modèles numériques de terrain, notamment des structures humaines. Il est donc indispensable d'avoir la meilleure précision possible pour ces lignes de crête.

La méthode selon l'invention permet de construire des segments de crête sur le modèle numérique de terrain, à la précision des images de départ.

Pour cela, la méthode utilisée se caractérise en ce que le procédé de détection de contours de relief selon l'invention est appliqué à chacune desdites images stéréoscopiques, et est suivi d'une étape d'élaboration de segments de crête à partir desdits contours.

Les différents caractéristiques et avantages apparaîtront de façon plus claire dans la description qui va suivre en référence aux figures annexées :

La figure 1 est un organigramme illustrant l'architecture générale du procédé.

La figure 2 montre un exemple de Modèle Numérique de Terrain (MNT).

La figure 3 illustre une étape optionnelle du procédé selon l'invention qui consiste à remplacer les contours par un contour moyen.

La figure 4 illustre la notion de droite épipolaire.

La figure 5 représente l'évaluation d'un critère d'affinité pour la mise en correspondance de deux segments.

Les figures 6a et 6b sont deux exemples pour l'illustration de ce critère d'affinité.

La figure 7 représente une étape permettant de préparer la construction des lignes de crête, selon une application de l'invention.

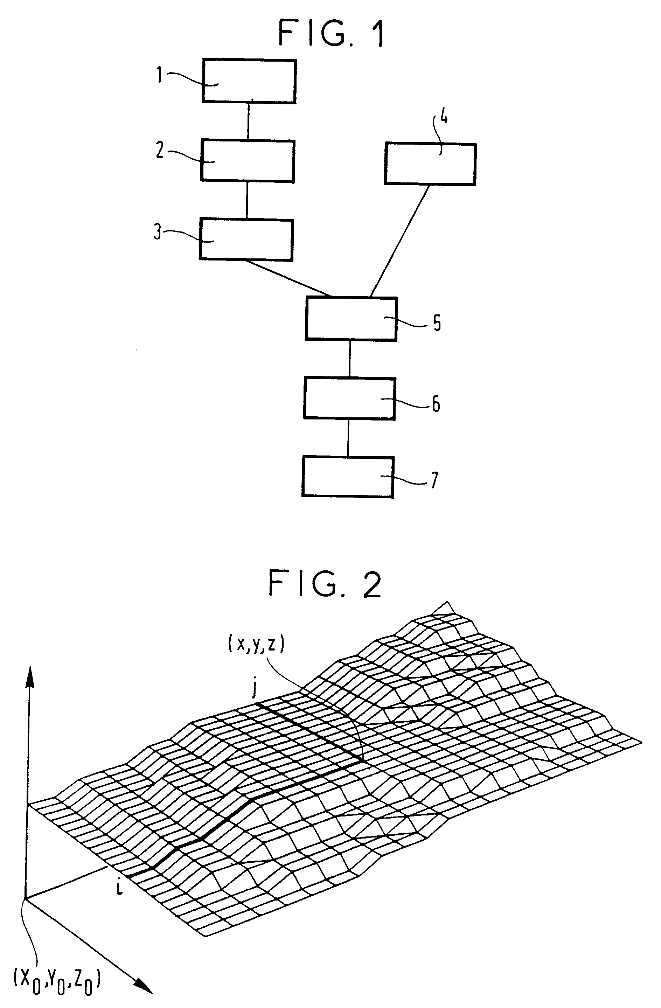

La figure 2 montre un exemple de modèle numérique de terrain. Un Modèle Numérique de Terrain (MNT ou DEM pour *Digital Elevation* Map en anglais) est une notion bien connue dans le domaine de l'imagerie tridimensionnelle (3D). Il s'agit d'une représentation matricielle et échantillonnée d'un terrain dans laquelle à chaque point de coordonnées i, j, on fait correspondre une hauteur h(i, j).

Les relations qui relient les coordonnées i et j dans le modèle numérique de terrain et les coordonnées x, y, z dans le monde 3D réel sont données par:

$$x = X_0 + i \times \Delta_x$$

$$y = Y_0 + j \times \Delta_y$$

$$z = h(i, j)$$

où $X_0$ et $Y_0$ représentent les coordonnées du point d'origine du modèle numérique de terrain, et $\Delta_x$ et $\Delta_y$ les distances réelles séparant deux échantillons suivant les deux directions du terrain.

Les techniques de construction de modèles numériques de terrain à partir d'un couple d'images stéréoscopiques d'un même terrain sont connues de l'homme du métier. On peut citer, à titre d'exemples de références, « *Performance Evaluation of Scene Registration and Stereo Matching for Cartographic Feature Extraction* » de Yuan C. Hsieh, David M. McKeown et Frédéric Perlant (paru dans IEEE *Transactions on Pattern Analysis and Machine Intelligence,* vol. 14, n°2, février *1992*), ainsi que « *A System for Digital Stereo Image Matching* » de Marsha Jo Hannah (paru dans *Photogrammetric Engineering and Remote Sensing,* vol. 55, N°12, décembre 1989, pages 1765 à 1770).

Sur ce modèle numérique de terrain, on applique l'étape référencée 2 sur la figure 1, qui consiste à calculer les lignes de crête. Il est à noter que l'expression « ligne de crête » doit être comprise dans son acceptation la plus large ainsi qu'il est communément fait dans ce domaine technique. Une ligne de crête doit être comprise comme étant un ensemble de points contigus présentant un maximum local de courbure.

Le calcul des lignes de crête est un problème ardu mais classique de l'imagerie tridimensionnelle. Le lecteur pourra se référer à nombre de documents décrivant une telle méthode dont « *The Marching Lines Algorithm : new results and proofs* » de Jean-Philippe Thirion et Alexis Gourdon, rapport de recherche de l'INRIA (Institut National de la Recherche en Informatique et Automatique) n°1881 paru en avril 1993, ou l'ouvrage « Vision par ordinateur » écrit par Olivier Monga et Radu Horaud, Traité des nouvelles technologies, série informatique chez Hermès, ou bien encore « *Crest lines extraction in volume 3D medical images : a multi-scale approach* » de Olivier Monga, Richard Lengagne et Rachid Deriche, rapport de recherche INRIA n°2338 paru en juillet 1994.

L'étape 3 de l'algorithme consiste à projeter les lignes de crête précédemment calculées sur les images stéréoscopiques. Cette étape est un calcul direct simple puisque les images stéréoscopiques sont supposées être calibrées (c'est-à-dire que l'on connaît les paramètres de la projection des points du Modèle Numérique de Terrain sur les images.

La référence 4 représente une étape d'extraction des contours (ou segmentation de contours) dans les images stéréoscopiques. De nombreuses méthodes existent et le procédé selon l'invention ne saurait se limiter à une méthode particulière. On peut toutefois citer à titre indicatif la méthode très classique dite de Canny-Deriche (ou de Canny), décrite dans « *Optimal edge detection using recursive filtering* » de Rachid Deriche, paru dans *First International Conference on Computer Vision* (pages 501-505) en juin 1987 ou dans « *Handbook of Image Processing Operators* » de Reinhard Klette et Piero Zamperoni, aux éditions John Wiley & *sons,* qui fait un point sur les techniques de segmentation de contours, ou encore dans l'ouvrage de Radu Horaud et Olivier Monga, cité précédemment.

De façon classique, cette étape comporte une phase de chaînage et de polygonalisation, de sorte que les données de sortie de cette étape 4 forment un ensemble de segments de droite.

Il est important de noter que l'étape 4 d'une part, et les étapes 1, 2 et 3, d'autre part, n'ont pas de lien de séquentialité entre elles. Aussi, au niveau de l'implémentation pratique du procédé selon l'invention, l'étape 4 est susceptible de s'insérer à la suite de l'étape 3 ou bien entre chacune des étapes 1, 2 et 3, ou bien avant l'étape 1, ou encore, de façon concurrente sur une architecture permettant des traitements multitâches.

La référence 5 représente une étape de mise en correspondance des contours extraits à l'étape référencée 4 et les lignes de crête projetées à l'étape référencée 3. Elle consiste à calculer pour chaque ligne de crête, un critère d'affinité de cette ligne de crête avec chacun des contours. Le résultat de cette étape est une liste de contours qui ont été mis en correspondance, au sens du critère d'affinité, avec une ligne de crête.

Le critère d'affinité utilisé peut revêtir plusieurs formes. D'une façon générale, il peut s'agir de tout critère permettant de mesurer la ressemblance entre deux segments de droite.

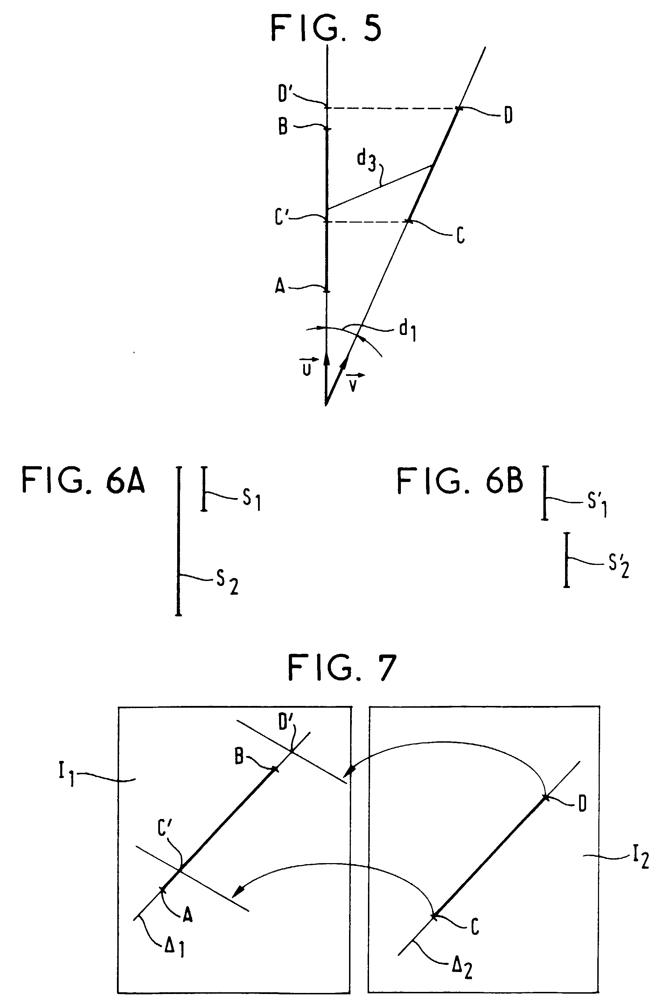

La figure 5 illustre la méthode d'évaluation de l'affinité entre deux segments selon une mise en oeuvre particulière de l'invention, mais il est possible d'imaginer différents critères sans sortir du cadre de l'invention. Selon la mise en oeuvre décrite, le critère d'affinité est un vecteur de 3 valeurs scalaires : $(d_1, d_2, d_3)$.

La première valeur $d_1$ est représentative de la différence d'orientation des deux segments. Elle est par exemple donnée par l'équation :

$$d_1 = |\sin\theta| = \frac{\det(\vec{u} \cdot \vec{v})}{\|\vec{u}\| \cdot \|\vec{v}\|}$$

dans laquelle $\det(\vec{u} \cdot \vec{v})$ est le déterminant du produit scalaire des vecteurs $\vec{u}$ et $\vec{v}$, chacun de ces vecteurs étant le vecteur directeur d'un des deux segments (AB et CD respectivement).

La deuxième valeur $d_2$ est la distance entre les milieux des deux segments considérés.

Un critère formé de ces deux premières valeurs $d_1$ et $d_2$ est insuffisant à caractériser l'affinité entre deux segments. Les figures 6a et 6b illustrent deux cas que le critère ne permet pas de séparer correctement.

Selon ces deux premiers critères, les segments de la figure 6b ($S'_1$ et $S'_2$) ont une affinité supérieure à ceux de la figure 6a ($S_1$ et $S_2$) : la distance des milieux des segments est moindre alors que l'orientation est identique. Intuitivement, cependant, il faudrait que l'affinité soit supérieure pour les segments de la figure 6a, car on peut aisément deviner que le segment $S_2$ correspond à une « sous-détection » du segment $S_1$.

La troisième valeur $d_3$ permet d'affiner le critère et de résoudre le problème évoqué ci-dessus en mesurant, en quelque sorte, l'inclusion d'un segment dans un autre. Elle est donnée par la formule :

$$d_3 = \frac{\|AB \cap C'D'\|}{\|AB\|}$$

dans laquelle AB∩C'D' est le segment dont les points sont à la fois éléments de AB et de C'D', et C'D' est la projection du segment CD sur la droite formée par AB. Plus généralement, le segment le plus court (ici CD) est projeté sur la droite formée par le segment le plus long (ici AB).

A partir de ces trois valeurs formant le critère d'affinité, on peut décider si un contour donné peut être mis en correspondance avec une ligne de crête ou non. Par exemple, en testant si chacune des valeurs scalaires $(d_1, d_2, d_3)$ est inférieure à un certain seuil.

Dans le cas où cette mise en correspondance est possible, cela signifie que le contour est un contour de relief.

A l'issue de cette étape de mise en correspondance des contours et des lignes de crête, on a comme résultat une liste de contours de relief.

Selon une mise en oeuvre de l'invention, il est possible de faire suivre cette étape par une étape supplémentaire, référencée 6 sur la figure 1, consistant à remplacer tous les contours mis en correspondance avec une ligne de crête par un contour moyen

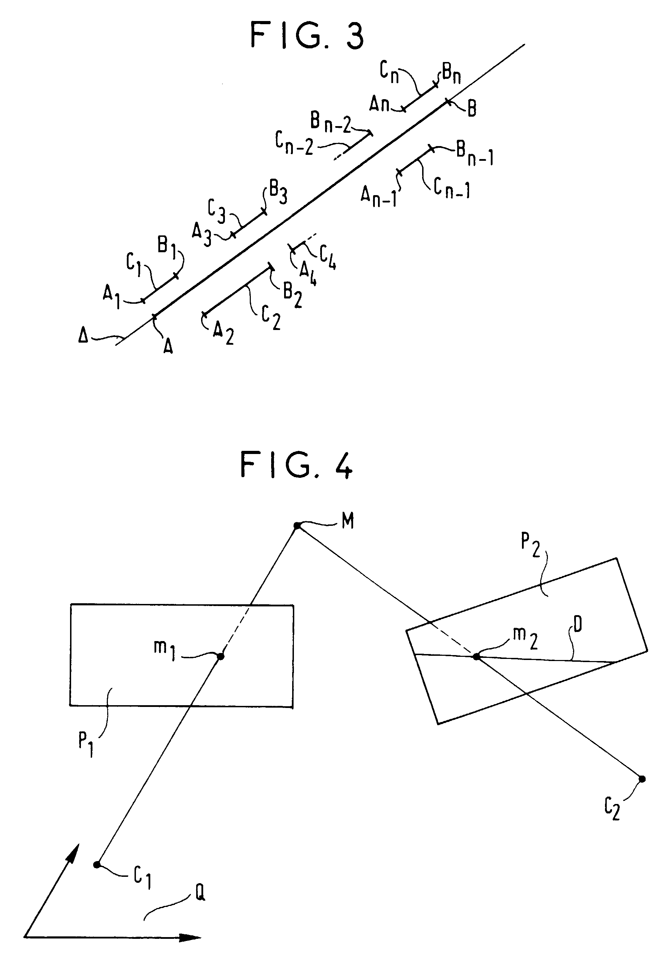

Une méthode pour ce faire est illustrée par la figure 3. Elle consiste à tracer la droite Δ qui minimise, par exemple au sens des moindres carrés, la distance entre elle et les contours $S_1$, $S_2$,...$S_n$ qui ont été mis en correspondance avec une même ligne de crête, puis à délimiter un segment sur cette droite en prenant les projections extrémales des bornes $A_iB_i$ des contours. Sur la figure 4, ce segment est délimité par les points A et B.

Comme nous l'avons vu, une application de l'invention est une méthode de construction de segments de crête dans un modèle numérique de terrain présentant la particularité d'être à la précision des images de départ et non à celle du modèle numérique de terrain.

Le procédé précédemment décrit permet d'extraire des contours de relief sur les images stéréoscopiques. Il suffit alors de construire à partir de ces contours, des segments de crête sur le modèle numérique de terrain. Dans la mesure où l'on connaît les coordonnées spatiales de chacun des points des deux images (puisque lesdites images sont supposées être calibrées), l'élaboration de ces segments de crête est directe.

Dans la suite, on prendra garde à distinguer les lignes de crêtes, qui sont calculées à l'étape 2 du procédé et qui sont à la précision du modèle numérique de terrain, et les segments de crête qui, eux, sont à la précision des images.

Cependant, il arrive que l'on ne puisse faire correspondre à un contour d'une image, un contour de l'autre image. Cela arrive notamment lorsque la ligne de crête correspondante est, au moins partiellement, cachée dans une des images, par le relief du terrain. Dans ce cas, il est impossible d'élaborer directement un segment de crête.

Pour résoudre ce problème, on peut mettre en oeuvre une étape supplémentaire, référencée 7 sur la figure 1, qui consiste à tester si les données sont suffisantes pour élaborer un segment de crête, et dans le cas positif, à déterminer ce segment de crête à partir de données éventuellement incomplètes.

D'une façon générale, pour chaque contour d'une image traitée, deux cas sont envisageables :

- Il n'y pas de contour correspondant dans l'autre image. Auquel cas, il n'est pas possible d'élaborer un segment de crête, car les données sont insuffisantes.
- Il y a au moins un contour correspondant dans l'autre image. Dans ce cas, il est possible d'élaborer un segment de crête.

Cependant, dans ce dernier cas, il peut arriver que la ligne de crête soit seulement partiellement occultée, de sorte que seule une partie du segment crête est susceptible d'être construite.

La méthode utilisée pour construire ce segment de crête consiste à d'abord sélectionner dans chacune des deux images la partie du contour de relief qui correspond effectivement au contour de relief de l'autre image, puis à construire le segment de crête à partir des parties de contour ainsi sélectionnées.

Afin de sélectionner la partie pertinente du contour de relief, on peut utiliser avec profit la notion de droite épipolaire, illustrée par la figure 4.

Une image d'un terrain se caractérise, entre autres paramètres, par un centre de prise de vue $C_1$ ou $C_2$ et un plan focal $P_1$ ou $P_2$ sur lequel est projeté le terrain visualisé selon une projection pyramidale classique.

Un point M du terrain est projeté sur $P_1$ et $P_2$ en deux points, respectivement $m_1$ et $m_2$. Par construction, on sait que les points M, $m_1$, $m_2$, $C_1$ et $C_2$ appartiennent à un même plan Q.

Dans le cadre de l'invention, le problème est de déterminer le lieu des points $m_2$ (respectivement $m_1$) pouvant être la projection dans $P_2$ (respectivement $P_1$) d'un point M inconnu, connaissant son autre projection $m_1$ (respectivement $m_2$) et les paramètres de visualisation (c'est-à-dire les centres de prises de vue $C_1$ et $C_2$ et les plans focaux $P_1$ et $P_2$) puisque, par hypothèse, les images sont calibrées.

On déduit aisément les coordonnées du plan Q des positions des trois points $C_1$, $C_2$ et $m_1$ (respectivement $m_2$) qui sont connues. Par construction, le point $m_2$ (respectivement $m_1$) ne peut être que sur l'intersection des plans Q et $P_2$ (respectivement $P_1$) qui sont tout deux connus, c'est-à-dire sur une droite D que l'on appelle, par définition, droite épipolaire.

Aussi, l'extrémité d'un contour correspond, dans l'autre image, à l'intersection du contour correspondant et de la droite épipolaire engendrée par ladite extrémité. Par exemple, sur la figure 5, le contour CD dans l'image $I_2$ correspond au contour AB dans l'image $I_1$. Le point

d'extrémité D engendre une droite épipolaire dans l'image I$_1$ qui coupe la droite générée par le segment BD en un point D'. Ce point, que l'on appellera homologue de D par la suite, est la projection du même point du modèle numérique de terrain que D.

De la même façon, le point C' est l'homologue du point C.

La partie pertinente du contour AB est l'intersection entre AB et le segment formé par les points homologues du contour CD correspondant. Dans le cas particulier représenté sur la figure 5, ce contour est C'B.

Une alternative peut consister, au contraire, à prendre le contour de taille maximale, c'est-à-dire l'union entre AB et le segment formé par les points homologues du contour CD correspondant (*i.e.* AD' dans le cas représenté), même si la confiance que l'on peut porter en un tel contour est faible. Le but n'est alors plus d'avoir des segments de crête précis et sûrs, mais au contraire des segments de crête extrapolés.

## Revendications

1.  Procédé de détection de contours de relief dans une image, caractérisé en ce que ladite image fait partie d'une représentation numérique d'un terrain, formée d'une paire d'images stéréoscopiques dudit terrain, et en ce que le dit procédé comporte les étapes suivantes :

    *   Calcul d'un modèle numérique du terrain à partir de ladite paire d'images stéréoscopiques,
    *   Extraction des lignes de crête dans ledit modèle numérique,
    *   Projection desdites lignes de crête dans ladite image,
    *   Calcul des contours dans ladite image,
    *   Décision qu'un contour est un contour de relief si la distance à la ligne de crête projetée la plus proche, au sens d'un certain critère d'affinité, est inférieure à un certain seuil.

2.  Procédé de détection de contours de relief, conforme à la revendication 1, caractérisé par l'ajout en fin de traitement d'une étape consistant à remplacer l'ensemble des contours mis en correspondance avec une même ligne de crête, par un contour moyen.

3.  Procédé de détection de contours de relief, selon l'une des revendications précédentes, caractérisé en ce que ledit critère d'affinité consiste en trois valeurs scalaires, la première représentant la distance entre le milieu dudit contour et le milieu de ladite ligne de crête, la deuxième représentant l'angle entre ledit contour et ladite ligne de crête, la troisième étant donnée par l'équation :

$$d = \frac{\|AB \cap C'D'\|}{\|AB\|}$$

dans laquelle AB est le plus long segment parmi ladite ligne de crête et ledit contour, C'D' est la projection sur la droite formée par AB du plus long segment parmi ladite ligne de crête et ledit contour, et AB∩C'D' est le segment dont les points sont à la fois éléments de AB et de C'D'

4.  Procédé de construction de segments de crête dans un modèle numérique de terrain, caractérisé en ce que le procédé de détection de contours de relief conformes à l'une des revendications précédentes est appliqué à chacune desdites images stéréoscopiques, et est suivi d'une étape d'élaboration desdits segments de crête à partir desdits contours.

5.  Procédé de construction de segments de crête selon la revendication précédente, caractérisé en ce que ladite étape d'élaboration de segment de crête comporte une étape consistant à remplacer chaque contour de chacune desdits images stéréoscopiques par l'intersection entre ledit contour et le segment formé par les points homologues du contour correspondant dans l'autre image.

# FIG. 1

# FIG. 2

$(x,y,z)$

$j$

$i$

$(X_0, Y_0, Z_0)$

# FIG. 3

# FIG. 4

# FIG. 5

# FIG. 6A

# FIG. 6B

# FIG. 7

Office européen
des brevets

**RAPPORT DE RECHERCHE EUROPEENNE**

Numéro de la demande

EP 98 40 0484

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 309 522 A (DYE ROBERT) 3 mai 1994<br>* abrégé *<br>* colonne 1, ligne 54 - colonne 2, ligne 14 * | 1-5 | G06T7/00 |
| A | US 3 943 344 A (KIDODE MASATSUGU ET AL) 9 mars 1976<br>* abrégé *<br>* colonne 5, ligne 31 - colonne 6, ligne 38; figure 4 * | 1-5 | |
| A | MIN S KANG ET AL: "RECOVERING AN ELEVATION MAP BY STEREO MODELING OF THE AERIAL IMAGE SEQUENCE"<br>OPTICAL ENGINEERING,<br>vol. 33, no. 11, 1 novembre 1994,<br>pages 3793-3802, XP000475122<br>* alinéa 3.3 * | 1-5 | |
| A | KWEON I S ET AL: "EXTRACTING TOPOGRAPHIC TERRAIN FEATURES FROM ELEVATION MAPS"<br>CVGIP IMAGE UNDERSTANDING,<br>vol. 59, no. 2, 1 mars 1994,<br>pages 171-182, XP000439838<br>* abrégé *<br>* alinéa 6 * | 4 | **DOMAINES TECHNIQUES RECHERCHES (Int.Cl.6)**<br><br>G06T |

Le présent rapport a été établi pour toutes les revendications

| Lieu de la recherche | Date d'achèvement de la recherche | Examinateur |
|---|---|---|
| LA HAYE | 22 mai 1998 | Gonzalez Ordonez, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)